# FASCICULE DE BREVET EUROPEEN

(11) **EP 4 136 327 B1**
(45) Date de publication et mention de la délivrance du brevet: **21.08.2024**
(21) Numéro de dépôt: 21726693.1
(22) Date de dépôt: 13.04.2021
(51) Int. Cl.: F01D 11/24, F01D 25/08, F01D 25/12, F01D 25/14, F01D 25/24

(54) **DISPOSITIF DE REFROIDISSEMENT D'UN CARTER DE TURBINE**
KÜHLVORRICHTUNG FÜR TURBINENGEHÄUSE
TURBINE HOUSING COOLING DEVICE

(30) Priorité: 17.04.2020 FR 2003894
(43) Date de publication de la demande: 22.02.2023
(73) Titulaire: SAFRAN AIRCRAFT ENGINES, 75015 Paris (FR)
(72) Inventeur: SILET, Benoit Guillaume, 77550 MOISSY-CRAMAYEL (FR); BLANCHARD, Stéphane Pierre Guillaume, 77550 MOISSY-CRAMAYEL (FR); GARNIER, Fabien Stéphane, 77550 MOISSY-CRAMAYEL (FR); ZAIA, Thibaud Louis, 77550 MOISSY-CRAMAYEL (FR)
(74) Mandataire: Regimbeau
(86) Numéro de dépôt international: PCT/FR2021/050650
(87) Numéro de publication internationale: WO 2021/209713

(56) Documents cités:
- EP-A1- 0 892 153
- EP-A1- 1 205 637
- EP-B1- 0 892 153
- GB-A- 2 103 718
- US-A1- 2014 030 066

## Description

### DOMAINE DE L'INVENTION

La présente invention se rapporte à un carter de turbine d'une turbomachine, en particulier d'un turboréacteur ou d'un turbopropulseur d'avion.

### ETAT DE LA TECHNIQUE

Le carter d'une turbine basse pression est une pièce maitresse pour porter la turbine basse pression et garantir une transmission correcte de l'énergie de détente à la turbine basse pression, au compresseur basse pression et au fan. Ce carter supporte principalement les secteurs d'anneaux qui entourent chaque roue mobile et le distributeur grâce à des crochets de carter. Ces crochets sont soumis à des températures élevées et à de forts gradients thermiques. En effet, à l'extérieur du carter, l'air a un niveau de températures de l'ordre de quelques centaines de degrés, tandis qu'à l'intérieur du carter circule l'air de veine qui peut atteindre plus de 1000°C. Il est donc avantageux de refroidir les crochets de carter.

De plus, afin de garantir un rendement élevé de la turbomachine, il convient de limiter le flux d'air ne traversant pas les roues mobiles des différents étages, c'est-à-dire de limiter les fuites entre les extrémités radialement externes des aubes et l'anneau en matériau abradable. Pour cela, il convient de contrôler le jeu au niveau de cette interface, ce jeu étant dépendant de la température du carter, et notamment des zones dudit carter comportant les crochets ou brides supportant l'anneau.

Afin de maîtriser le jeu précité et d'éviter toute dégradation prématurée des différentes parties fixes et mobiles de la turbine, il est ainsi nécessaire de prévoir des moyens de refroidissement efficaces pouvant s'intégrer aisément dans l'environnement de la turbomachine.

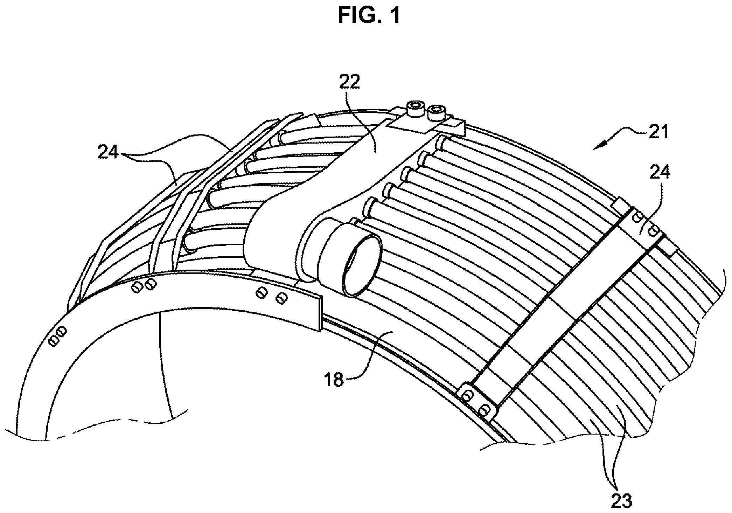

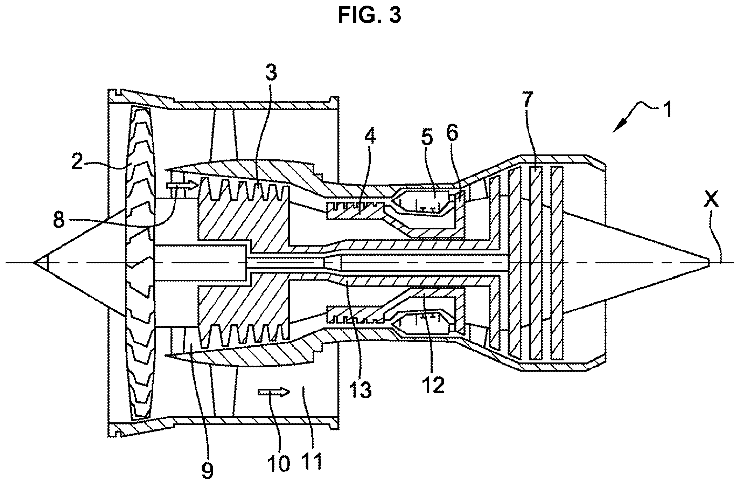

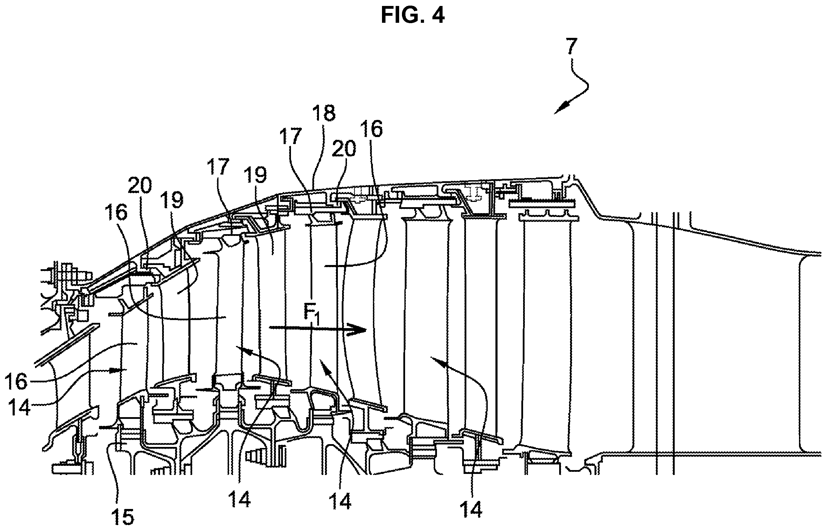

La figure 1 jointe représente un dispositif de refroidissement d'un carter selon la demande de brevet FR3021700, au nom de la Demanderesse. Sur cette figure, on peut voir un dispositif de refroidissement 21 d'un carter 18 de turbine basse pression 7, cette turbine 7 n'étant elle-même visible que sur les figures 3 et 4. Ce dispositif de refroidissement comporte des boîtiers collecteurs 22, chaque boîtier collecteur 22 formant un canal s'étendant axialement. Le dispositif 21 comporte de plus des tubes 23 s'étendant circonférentiellement de part et d'autre des boîtiers collecteurs 22. Lesdits tubes 23, également appelés rampes, sont formés par des canalisations courbes de section circulaire, chaque tube 23 s'étendant circonférentiellement autour du carter par exemple selon un angle d'environ 90 degrés. Chaque tube 23 comporte une entrée d'air débouchant dans le canal du boîtier collecteur 22 correspondant et une extrémité distale fermée. Chaque tube 23 comporte en outre une paroi cylindrique pourvue d'orifices d'éjection d'air tournés vers le carter 18, de sorte que de l'air de refroidissement puisse pénétrer dans les boîtiers collecteurs 22 puis dans les tubes 23, avant de déboucher par les orifices d'éjection en regard du carter 18, de manière à le refroidir. On parle notamment de refroidissement par impact puisque l'air vient impacter le carter 18.

En outre, bien que cela ne soit pas visible sur la figure 1, le carter 18 comprend sur sa face radialement interne, au moins un crochet annulaire qui permet de fixer des aubes fixes ou des secteurs d'anneau d'étanchéité. La technique précitée de refroidissement par impact de jets d'air ne permet toutefois pas de bien refroidir ces crochets. Il serait donc souhaitable d'améliorer le refroidissement de la peau de carter de sorte à améliorer le refroidissement des crochets sur toute leur longueur et ainsi améliorer la tenue thermique en bout de crochet.

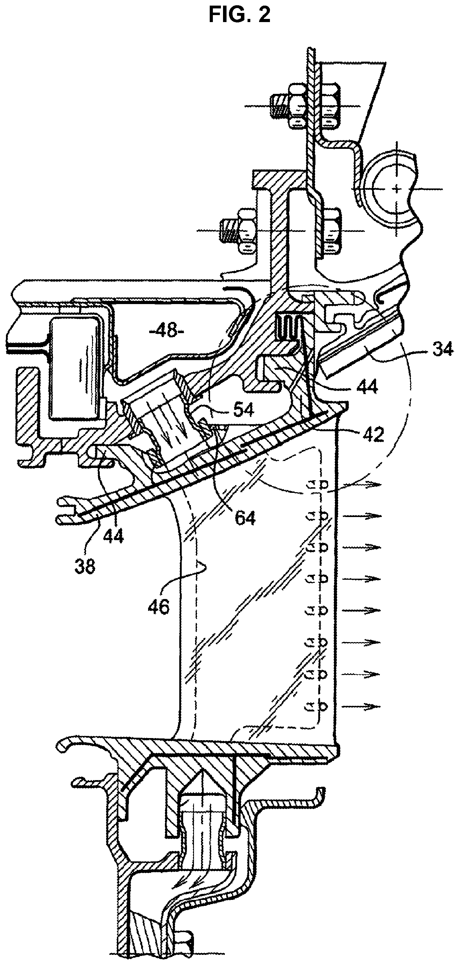

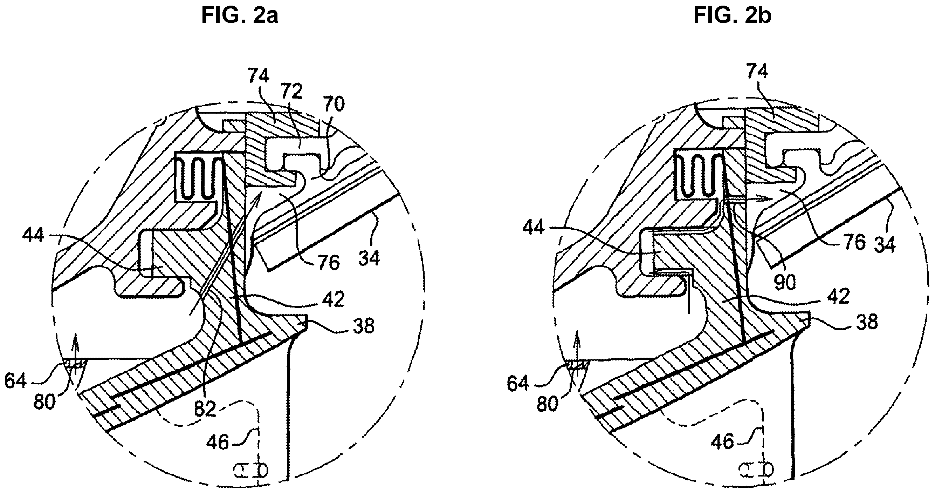

On connait également le document EP1847687 qui propose un dispositif de refroidissement d'un carter de turbine d'une turbomachine. Les figures jointes 2, 2a et 2b représentent un tel dispositif de refroidissement. Ce dernier utilise une partie de l'air destiné au refroidissement du distributeur amont de la turbine pour refroidir les crochets 70, 72 et un verrou 74 permettant la fixation de secteurs d'anneau 34. Ainsi, dans ce document, une enceinte d'alimentation 48 alimente en air les cavités internes 46 des aubes du distributeur grâce à des tubes cylindriques 54. Des ouvertures 80, 82, 90 sont réalisées de façon à relier les cavités internes 46 des aubes à l'espace annulaire de logement 76 dans lequel se trouvent les crochets de fixation 70, 72. Plus précisément, des ouvertures sont réalisées :
- soit dans les plaquettes 64 qui ferment la cavité interne de chaque aube et dans le rebord externe aval 42 de la paroi externe 38 du distributeur comme cela est représenté sur les **figures 2** **et** **2a** ;
- soit dans le rebord annulaire externe 42 du distributeur et dans la patte annulaire 44 de ce rebord externe 42 du distributeur, comme cela est représenté sur la **figure 2b****.**

Toutefois, dans les deux cas, l'air utilisé pour refroidir les crochets est relativement chaud du fait des échanges convectifs avec la plateforme radialement externe 38 du distributeur. En outre, les conduits qui amènent l'air de refroidissement depuis l'intérieur des aubes vers les crochets sont relativement longs, ce qui fait que l'air subit dans ces conduits des échanges thermiques additionnels.

On connait enfin d'après les documents EP 0 892 153, GB 2 103 718, EP 1 205 637 et US 2014/030066 des dispositifs de refroidissement d'un carter muni sur sa face radialement interne de crochets de fixation de secteurs d'anneau. Toutefois, tous ces dispositifs comprennent un conduit collecteur destiné à l'acheminement de l'air de refroidissement, qui est distinct du carter portant les crochets. Le refroidissement s'effectue via des orifices d'éjection d'air, percés au travers du conduit collecteur et orientés en direction dudit carter. Un tel refroidissement par impact n'est pas suffisant pour refroidir efficacement les crochets.

Il existe donc un besoin d'améliorer les techniques de refroidissement de l'art antérieur.

### EXPOSE DE L'INVENTION

Un but de l'invention est de proposer un meilleur refroidissement des crochets de carter de turbomachine que les solutions de l'art antérieures présentées ci-dessus.

Il est dès lors proposé selon un premier aspect de l'invention, un carter de turbine de turbomachine, ledit carter s'étendant autour d'un axe, comprenant une paroi annulaire et un dispositif de refroidissement, la paroi étant pourvue d'au moins un crochet de carter qui s'étend en saillie radialement à partir de l'intérieur de la paroi, chaque crochet étant configuré pour permettre le montage, sur le carter, de secteurs d'anneau disposés circonférentiellement bout à bout autour de l'axe, et dans lequel le dispositif de refroidissement comprend au moins un conduit collecteur destiné à l'acheminement d'air de refroidissement qui s'étend circonférentiellement autour de la paroi, chaque conduit collecteur présentant une entrée et une sortie d'air de refroidissement.

Conformément à l'invention, chaque conduit collecteur et la paroi présentent une portion commune qui délimite ledit conduit collecteur et à partir de laquelle s'étend un crochet correspondant et chaque conduit collecteur est en communication fluidique avec un circuit de ventilation qui s'étend dans le crochet correspondant.

En d'autres termes, la paroi à partir de laquelle s'étend le crochet constitue une portion de la paroi du conduit collecteur destiné à l'acheminement de l'air de refroidissement.

Cette configuration permet de refroidir une partie de la surface extérieure dudit carter plus importante que celle que l'on peut refroidir avec les dispositifs de l'état de la technique et ainsi d'augmenter la durée de vie du carter.

Avantageusement, le carter de turbine comprend également une ou plusieurs des caractéristiques suivantes :
- le dispositif de refroidissement comprend deux conduits collecteurs axialement adjacents séparés par une paroi de séparation.
- chaque circuit de ventilation s'étend dans la majeure partie axiale de l'étendue axiale du crochet correspondant.
- Chaque circuit de ventilation s'étend circonférentiellement dans le crochet correspondant.
- l'entrée de chaque conduit collecteur est connectée à un tube d'alimentation pour l'acheminement d'air dans le conduit collecteur.
- chaque circuit de ventilation débouche principalement radialement dans le conduit collecteur correspondant par un canal d'entrée.
- chaque circuit de ventilation débouche sur une surface externe du dispositif de refroidissement par un canal de sortie.
- le canal d'entrée et/ou le canal de sortie s'étend au droit du crochet correspondant.
- le canal d'entrée et le canal de sortie s'étendent à une première et une seconde position circonférentielle du crochet correspondant, la première et la seconde position circonférentielle dudit crochet correspondant étant destinées à coïncider avec les extrémités circonférentiellement opposées d'un secteur d'anneau destiné à être suspendu sur le crochet correspondant.

Le dispositif de refroidissement proposé permet un meilleur refroidissement du crochet de carter sur toute sa longueur, une augmentation de la durée de vie du crochet en limitant les gradients thermiques sur la longueur du crochet, et en limitant les gradients thermiques tangentiels.

De plus, la circulation d'air sur des secteurs qui s'étendent circonférentiellement permet de mieux refroidir les bouts de crochets et de réduire les distorsions thermiques angulaires.

En outre, le système de collecteur du carter permet d'homogénéiser la température d'entrée de refroidissement du carter.

De plus, en comparaison de l'art antérieur, le dispositif de refroidissement proposé permet de prélever moins de débit de prélèvement pour assurer la même fonction de protection thermique du carter.

Également, le dispositif de refroidissement proposé peut être facilement intégré dans les modèles de moteurs composés d'un carter avec des crochets.

Selon un deuxième aspect, l'invention propose une turbomachine comportant une turbine, et un carter de turbine selon l'une des caractéristiques précédentes.

### DESCRIPTION DES FIGURES

D'autres caractéristiques, buts et avantages de l'invention ressortiront de la description qui suit, qui est purement illustrative et non-limitative, et qui doit être lue en regard des dessins annexés sur lesquels :
La figure 1 précédemment présentée est une vue en perspective d'un dispositif de refroidissement de l'art antérieur ;
La figure 2 précédemment présentée est une vue en coupe d'un dispositif de refroidissement de l'art antérieur ;
La figure 2a précédemment présentée est une vue en coupe agrandie du dispositif de la figure 2 ;
La figure 2b précédemment présentée est une vue en coupe agrandie d'un autre dispositif de refroidissement de l'art antérieur ;
La figure 3 est une vue en coupe axiale d'un turboréacteur à double flux de l'art antérieur,
La figure 4 est une vue en coupe axiale d'une partie du turboréacteur de l'art antérieur, illustrant notamment la turbine basse pression,
La figure 5 est une vue en perspective d'un dispositif de refroidissement de carter de turbomachine selon un mode de réalisation de l'invention ; et
La figure 6 est une vue détaillée du dispositif de refroidissement de carter de turbomachine de la figure 5.

### DESCRIPTION DETAILLEE DE L'INVENTION

La **figure 3** représente une turbomachine 1 à double flux et à double corps. L'axe de la turbomachine est référencé X et correspond à l'axe de rotation des parties tournantes. Dans ce qui suit, les termes axial et radial sont définis par rapport à l'axe X.

La turbomachine 1 comporte, de l'amont vers l'aval dans le sens d'écoulement des gaz, une soufflante 2, un compresseur basse pression 3, un compresseur haute pression 4, une chambre de combustion 5, une turbine haute pression 6 et une turbine basse pression 7.

L'air issu de la soufflante 2 est divisé en un flux primaire 8 s'écoulant dans une veine annulaire primaire 9, et un flux secondaire 10 s'écoulant dans une veine annulaire secondaire 11 entourant la veine annulaire primaire 9. Le compresseur basse pression 3, le compresseur haute pression 4, la chambre de combustion 5, la turbine haute pression 6 et la turbine basse pression 7 sont ménagés dans la veine primaire 9.

Le rotor de la turbine haute pression 6 et le rotor du compresseur haute pression 4 sont couplés en rotation par l'intermédiaire d'un premier arbre 12 de manière à former un corps haute pression.

Le rotor de la turbine basse pression 7 et le rotor du compresseur basse pression 3 sont couplés en rotation par l'intermédiaire d'un second arbre 13, de manière à former un corps basse pression, la soufflante 2 pouvant être reliée directement au rotor du compresseur basse pression 3 ou bien par l'intermédiaire d'un train d'engrenage épicycloïdal par exemple.

Comme cela est mieux visible à la **figure 4****,** la turbine basse-pression 7 comporte en particulier différents étages successifs comportant des roues mobiles 14 et des parties fixes. La roue mobile comporte un disque 15, au niveau duquel sont montées des aubes 16. Les extrémités des aubes 16 sont entourées d'un anneau fixe 17 en matériau abradable, ledit anneau 17 étant fixé sur le carter 18 de la turbine. Des distributeurs 19 sont situés en amont des roues mobiles 14. Les distributeurs 19 et les anneaux 17 sont montés sur le carter par l'intermédiaire de brides ou de crochets 20 s'étendant depuis la surface radialement interne du carter 18. Ce carter 18 supporte principalement les secteurs d'anneaux qui entourent chaque roue mobile 14 et le distributeur 19, grâce aux crochets circonférentiels 20 fixés sur le carter.

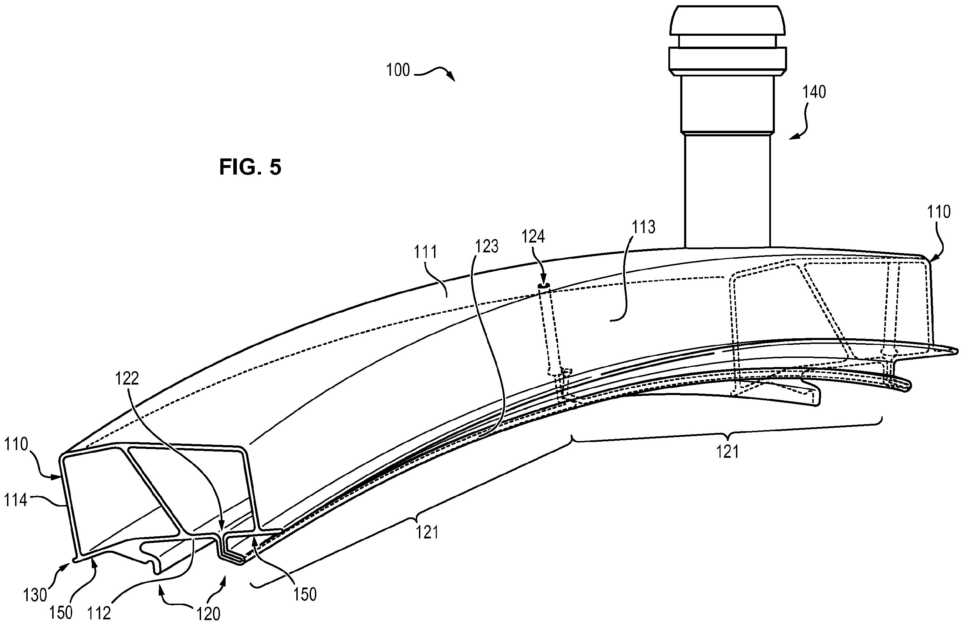

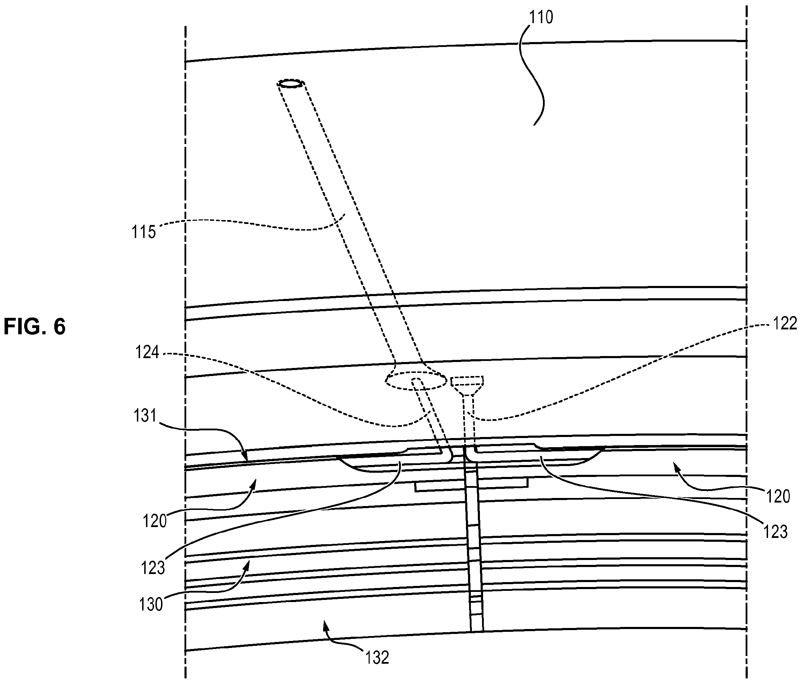

En référence aux **figures 5** **et** **6****,** il est illustré un dispositif de refroidissement 100 d'un carter 130 de turbine, telle qu'une turbine basse-pression pour une turbomachine 1, selon un mode de réalisation de l'invention.

Ce dispositif de refroidissement 100 est intégré au carter 130.

Le carter 130 s'étend autour de l'axe longitudinal X de la turbomachine, qui est également celui de la turbine.

Le carter 130 comprend sur une paroi radiale, une surface externe 131, et une surface interne 132.

Le carter 130 comprend en outre une pluralité de crochets 120 en saillie radialement vers l'intérieur par rapport à sa surface interne 132, les crochets 120 permettant comme décrit précédemment la fixation d'aubes d'un aubage fixe (distributeur) de la turbine basse-pression et des secteurs d'anneau d'étanchéité comprenant un élément abradable qui est destiné à être agencé radialement en regard des aubes mobiles du rotor.

Avantageusement, les crochets 120 s'étendent continûment sur la circonférence de la surface interne 132 de manière à former un rail annulaire, et ce en plusieurs positions axialement décalées du carter 130.

Il est nécessaire de protéger le carter 130 d'un échauffement excessif pour préserver l'intégrité des éléments du carter 130 mais également pour un autre rôle, qui est celui du pilotage du jeu radial entre l'aubage mobile de la turbine et le carter 130 qui l'entoure. En effet, les changements de température du carter 130 provoquent une variation du jeu entre l'aubage mobile et le carter à cause de la dilatation thermique du carter 130.

La réduction du jeu entre le sommet de l'aubage mobile et le carter 130 est un élément déterminant pour les performances de la turbomachine car plus les jeux radiaux sont faibles, moins le débit contournant l'aubage est important et meilleur est le rendement de la turbine.

Le contrôle des jeux évite ainsi que la turbine perde en performance. Dans le moteur, il est en effet primordial de piloter les jeux entre les sommets d'aubes mobiles et une enveloppe périphérique. Le déplacement radial de cette enveloppe annulaire étant dépendant de la dilatation du carter 130, la maîtrise de la température d'une partie au moins de ce carter 130 par de l'air frais est donc essentielle.

Comme ces crochets 120 sont les portions du carter 130 qui déterminent directement les jeux au bout des aubes, il est donc utile que le dispositif de refroidissement 100 propose des moyens de refroidissement de ces crochets 120.

Dans ce but, le dispositif 100 comporte une pluralité de conduits collecteurs 110s'étendant circonférentiellement sur le tour du carter 130 sensiblement sur toute la périphérie, c'est-à-dire sensiblement à 360°. Dans l'exemple de réalisation représenté sur les figures 5 et 6, ces conduits collecteurs 110 sont au nombre de deux.

Chaque conduit collecteur 110 entoure le carter sur des parties respectives de circonférence du carter 130. Comme on l'a indiqué les crochets 120 se trouvent disposés sur la circonférence de la surface interne 132 du carter 130, sur plusieurs étages séparés axialement. Avantageusement, chaque collecteur 110 est disposé de telle sorte à s'étendre sur un segment circonférentiel comportant un étage de crochets 120.

Typiquement pour une turbine basse pression, le dispositif de refroidissement 100 comporte une pluralité de conduits collecteurs 110 disposés sur autant d'étages de crochets 120 du carter 130.

Chaque conduit collecteur 110 est raccordé à un conduit d'alimentation 140. Ledit conduit d'alimentation 140 est principalement radial et débouche sur la surface externe du dispositif de refroidissement 100. Le conduit d'alimentation 140 est configuré pour prélever de l'air froid depuis un point de prélèvement ; il s'agit usuellement d'un point de la veine secondaire d'écoulement des gaz de la machine, dont une partie du débit est prélevée, de façon connue dans la technique. Chaque conduit collecteur 110 est ainsi raccordé à une source d'alimentation en air sous pression pour l'acheminement d'air dans ledit conduit 110.

Dans le mode de réalisation illustré, un conduit collecteur 110 comporte une paroi externe 111 (radialement externe) et une paroi interne 112 (radialement interne), et deux parois latérales 113 disposées de part et d'autre des parois externe 111 et interne 112. Deux conduits collecteurs 110 axialement adjacents peuvent être séparés par une paroi de séparation constituée par une des parois latérales 113 communes aux deux conduits collecteurs 110 adjacents.

La paroi externe 111 comporte un orifice permettant de raccorder le conduit collecteur 110 au conduit d'alimentation 140. Le raccord à la source d'alimentation en air sous pression pourrait être prévu sur n'importe quelle paroi du collecteur 110 sauf la paroi interne 112.

Les parois externe 111 et interne 112 sont concentriques, le conduit collecteur 110 pouvant présenter une section transversale trapézoïdale.

Avantageusement, la paroi interne 112 est configurée pour épouser la forme d'un segment circonférentiel du carter 130, de telle sorte que la paroi interne 112 constitue une partie de la surface externe (peau) du carter 130. En d'autres termes, chaque conduit collecteur 110 et la paroi 112 munie d'au moins un crochet 120 présentent une portion commune 150, comme on peut le voir sur la figure 5. Cette configuration permet de refroidir une partie de la surface externe dudit carter 130 plus importante que celle que l'on peut refroidir avec les dispositifs de l'état de la technique et ainsi d'augmenter la durée de vie du carter 130.

De façon avantageuse, le conduit collecteur 110 est d'une seule pièce et peut être obtenu par un procédé de fabrication additive, tel que la fusion laser.

Comme illustré plus en détail sur la figure 6, à la différence de l'art antérieur, au moins un crochet 120 n'est pas de section pleine mais comporte au moins un circuit de ventilation 121 comportant un canal d'entrée 122, un canal de sortie 124, et un canal longitudinal interne 123 s'étendant sur la longueur circonférentielle du crochet 120 entre le canal d'entrée 122 et le canal de sortie 124.

Le canal d'entrée 122 permet de connecter le canal longitudinal 123 avec l'intérieur du conduit collecteur 110. Préférentiellement, le canal d'entrée 122 est au droit du crochet 120.

Le canal de sortie 124 permet de connecter le canal longitudinal 123 avec l'extérieur du carter 130 et du conduit collecteur 110, par un passage 115 traversant le conduit collecteur 110 et débouchant à la surface de la paroi externe 111. Préférentiellement, le canal de sortie 124 est au droit du crochet 120.

Avantageusement, le canal de sortie 124 permet de connecter le canal longitudinal 123 à un point de la turbomachine 1, où la pression est inférieure à la pression du point de prélèvement. Préférentiellement, le point de rejet est dans le compartiment central (en anglais "core").

Comme décrit précédemment, les crochets 120 sont configurés pour le support de secteurs d'anneau. Préférentiellement, les crochets 120 comprennent un canal d'entrée 122 et un canal de sortie 124 par secteur d'anneau. Le canal d'entrée 122 et le canal de sortie 124 étant avantageusement disposés à une première et une seconde position circonférentielle du crochet 120 correspondant aux extrémités circonférentiellement opposées d'un secteur d'anneau positionné dans le crochet 120. Ainsi, la longueur circonférentielle du canal longitudinal 123 correspond environ à la longueur circonférentielle d'un secteur d'anneau.

Typiquement pour une turbine basse pression, un crochet 120 de carter 130 est configuré pour le support de 20 à 30 secteurs d'anneau. Ainsi pour un segment circonférentiel du carter 130 comportant un étage de crochets 120, le dispositif de refroidissement 100 comportera un nombre correspondant de circuit de ventilation 121, soit 20 à 30 se succédant circonférentiellement.

Préférentiellement, au sein d'un même crochet 120, pour deux circuits de ventilation 121 successifs, le canal de sortie 124 d'un premier circuit de ventilation 121 est accolé au canal d'entrée 122 d'un second circuit de ventilation 121.

Avantageusement, à la différence de l'art antérieur procédant au refroidissement des crochets par des dispositif à jets d'impact, le dispositif de refroidissement 100 permet d'utiliser une source d'air pressurisée et de la faire circuler à l'intérieur des crochets 120 de carter 130 de manière à augmenter la capacité de refroidissement par pompage de l'air de refroidissement.

De plus, la circulation d'air sur des secteurs qui s'étendent circonférentiellement permet de mieux refroidir les bouts de crochets et de réduire les distorsions thermiques angulaires.

Le dispositif de refroidissement 100 permet donc un meilleur refroidissement du crochet 120 de carter 130 sur toute sa longueur, une augmentation de la durée de vie du crochet en limitant les gradients thermiques sur la longueur du crochet 120, et en limitant les gradients thermiques tangentiels.

En outre, le système de conduits collecteurs 110 du carter 130 permet d'homogénéiser la température d'entrée de refroidissement du carter 130.

De plus, en comparaison avec l'art antérieur, le dispositif de refroidissement 100 permet de prélever moins de débit de prélèvement pour assurer la même fonction de protection thermique du carter.

Également, le dispositif de refroidissement 100 peut être facilement intégré dans les modèles de moteurs comprenant un carter avec des crochets.

Naturellement l'invention n'est pas limitée aux modes de réalisation décrits en référence aux figures et des variantes pourraient être envisagées sans sortir du cadre de l'invention. Le conduit collecteur pourrait ainsi présenter d'autres géométries.

## Revendications

1. Carter (130) de turbine de turbomachine (1), ledit carter (130) s'étendant autour d'un axe (X), comprenant une paroi (112) annulaire et un dispositif de refroidissement (100), la paroi (112) étant pourvue d'au moins un crochet (120) de carter qui s'étend en saillie radialement à partir de l'intérieur de la paroi (112), chaque crochet (120) étant configuré pour permettre le montage, sur le carter (30), de secteurs d'anneau disposés circonférentiellement bout à bout autour de l'axe (X), et dans lequel le dispositif de refroidissement (100) comprend au moins un conduit collecteur (110) destiné à l'acheminement d'air de refroidissement qui s'étend circonférentiellement autour de la paroi (112), chaque conduit collecteur (110) présentant une entrée et une sortie d'air de refroidissement, **caractérisé en ce que** chaque conduit collecteur (110) et la paroi (112) présentent une portion commune (150), qui délimite ledit conduit collecteur (110) et à partir de laquelle s'étend un crochet (120) correspondant et **en ce que** chaque conduit collecteur (110) est en communication fluidique avec un circuit de ventilation (121) qui s'étend dans le crochet (120) correspondant.

2. Carter (130) de turbine de turbomachine (1) selon la revendication précédente, dans lequel le dispositif de refroidissement (100) comprend deux conduits collecteurs (110) axialement adjacents, séparés par une paroi de séparation (113).

3. Carter (130) de turbine de turbomachine (1) selon l'une des revendications précédentes, dans lequel chaque circuit de ventilation (121) s'étend dans la majeure partie axiale de l'étendue axiale du crochet (120) correspondant.

4. Carter (130) de turbine de turbomachine (1) selon l'une des revendications précédentes, dans lequel chaque circuit de ventilation (121) s'étend circonférentiellement dans le crochet (120) correspondant.

5. Carter (130) de turbine de turbomachine (1) selon la revendication précédente, dans lequel l'entrée de chaque conduit collecteur (110) est connectée à un tube d'alimentation (140) pour l'acheminement d'air dans le conduit collecteur (110).

6. Carter (130) de turbine de turbomachine (1) selon l'une des revendications précédentes, dans lequel chaque circuit de ventilation (121) débouche principalement radialement dans le conduit collecteur (110) correspondant, par un canal d'entrée (122).

7. Carter (130) de turbine de turbomachine (1) selon l'une des revendications précédentes, dans lequel chaque circuit de ventilation (121) débouche sur une surface externe du dispositif de refroidissement (100) par un canal de sortie (124).

8. Carter (130) de turbine de turbomachine (1) selon la revendication 6 ou 7, dans lequel le canal d'entrée (122) et/ou le canal de sortie (124) s'étend au droit du crochet (120) correspondant.

9. Carter (130) de turbine de turbomachine (1) selon les revendications 6 et 7, dans lequel le canal d'entrée (122) et le canal de sortie (124) s'étendent à une première et une seconde position circonférentielle du crochet (120) correspondant, la première et la seconde position circonférentielle dudit crochet (120) correspondant étant destinées à coïncider avec les extrémités circonférentiellement opposées d'un secteur d'anneau destiné à être monté sur le crochet (120) correspondant.

10. Turbomachine (1) comportant une turbine, **caractérisée en ce qu'**elle comprend un carter (130) de turbine selon l'une quelconque des revendications précédentes.

## Patentansprüche

1. Turbinengehäuse (130) einer Turbomaschine (1), wobei sich das Gehäuse (130) um eine Achse (X) erstreckt, eine ringförmige Wand (112) und eine Kühlvorrichtung (100) umfasst, wobei die Wand (112) mit mindestens einem Gehäusehaken (120) versehen ist, der sich radial von der Innenseite der Wand (112) vorstehend erstreckt, wobei jeder Haken (120) so konfiguriert ist, dass er die Montage von Ringsektoren, die in Umfangsrichtung stirnseitig um die Achse (X) herum angeordnet sind, an dem Gehäuse (30) ermöglicht, und wobei die Kühlvorrichtung (100) mindestens einen Sammelkanal (110) für die Zufuhr von Kühlluft umfasst, der sich in Umfangsrichtung um die Wand (112) herum erstreckt, wobei jeder Sammelkanal (110) einen Kühllufteinlass und einen Kühlluftauslass aufweist, **dadurch gekennzeichnet, dass** jeder Sammelkanal (110) und die Wand (112) einen gemeinsamen Abschnitt (150) aufweisen, der den Sammelkanal (110) begrenzt und von dem aus sich ein entsprechender Haken (120) erstreckt und dass jeder Sammelkanal (110) in Fluidverbindung mit einem Belüftungskreislauf (121) steht, der sich in dem entsprechenden Haken (120) erstreckt.

2. Turbinengehäuse (130) einer Turbomaschine (1) nach vorhergehendem Anspruch, wobei die Kühlvorrichtung (100) zwei axial benachbarte Sammelkanäle (110) umfasst, die durch eine Trennwand (113) voneinander getrennt sind.

3. Turbinengehäuse (130) einer Turbomaschine (1) nach einem der vorhergehenden Ansprüche, wobei sich jeder Belüftungskreislauf (121) in dem größeren axialen Teil der axialen Erstreckung des entsprechenden Hakens (120) erstreckt.

4. Turbinengehäuse (130) einer Turbomaschine (1) nach einem der vorhergehenden Ansprüche, wobei sich jeder Belüftungskreislauf (121) umfangsmäßig in dem entsprechenden Haken (120) erstreckt.

5. Turbinengehäuse (130) einer Turbomaschine (1) nach vorhergehendem Anspruch, wobei der Einlass jedes Sammelkanals (110) mit einem Zuführrohr (140) verbunden ist, um Luft in den Sammelkanal (110) zu leiten.

6. Turbinengehäuse (130) einer Turbomaschine (1) nach einem der vorhergehenden Ansprüche, wobei jeder Belüftungskreislauf (121) über einen Einlasskanal (122) hauptsächlich radial in den entsprechenden Sammelkanal (110) mündet.

7. Turbinengehäuse (130) einer Turbomaschine (1) nach einem der vorhergehenden Ansprüche, wobei jeder Belüftungskreislauf (121) über einen Auslasskanal (124) an einer Außenfläche der Kühlvorrichtung (100) ausmündet.

8. Turbinengehäuse (130) einer Turbomaschine (1) nach Anspruch 6 oder 7, wobei sich der Einlasskanal (122) und/oder der Auslasskanal (124) lotrecht über den entsprechenden Haken (120) erstreckt.

9. Turbinengehäuse (130) einer Turbomaschine (1) nach den Ansprüchen 6 und 7, wobei sich der Einlasskanal (122) und der Auslasskanal (124) an einer ersten und einer zweiten Umfangsposition des entsprechenden Hakens (120) erstrecken, wobei die erste und die zweite Umfangsposition des entsprechenden Hakens (120) dazu bestimmt sind, mit den in Umfangsrichtung gegenüberliegenden Enden eines Ringsektors zusammenzufallen, der dazu bestimmt ist, an dem entsprechenden Haken (120) angebracht zu sein.

10. Turbomaschine (1), die eine Turbine aufweist, **dadurch gekennzeichnet, dass** sie ein Turbinengehäuse (130) nach einem der vorhergehenden Ansprüche umfasst.

## Claims

1. A turbomachine (1) turbine casing (130), said casing (130) extending around an axis (X), comprising an annular wall (112) and a cooling device (100), the wall (112) being provided with at least one casing hook (120) which extends in radial protrusion from the inside of the wall (112), each hook (120) being configured to allow the mounting, on the casing (30), of ring segments disposed circumferentially end to end around the axis (X), and wherein the cooling device (100) comprises at least one collector duct (110) intended to convey the cooling air which extends circumferentially around the wall (112), each collector duct (110) having a cooling air inlet and outlet, **characterized in that** each collector duct (110) and the wall (112) have a common portion (150), which delimits said collector duct (110) and from which a corresponding hook (120) extends and **in that** each collector duct (110) is in fluid communication with a ventilation circuit (121) which extends in the corresponding hook (120).

2. The turbomachine (1) turbine casing (130) as claimed in the preceding claim, wherein the cooling device (100) comprises two axially adjacent collector ducts (110), separated by a separating wall (113).

3. The turbomachine (1) turbine casing (130) as claimed in one of the preceding claim, wherein each ventilation circuit (121) extends in the greater axial part of the axial extent of the corresponding hook (120).

4. The turbomachine (1) turbine casing (130) as claimed in one of the preceding claims, wherein each ventilation circuit (121) extends circumferentially in the corresponding hook (120).

5. The turbomachine (1) turbine casing (130) as claimed in the preceding claim, wherein the inlet of each collector duct (110) is connected to a supply tube (140) for conveying air into the collector duct (110).

6. The turbomachine (1) turbine casing (130) as claimed in one of the preceding claims, wherein each ventilation circuit (121) opens mainly radially into the corresponding collector duct (110) via an inlet channel (122).

7. The turbomachine (1) turbine casing (130) as claimed in one of the preceding claims, wherein each ventilation circuit (121) opens onto an outer surface of the cooling device (100) via an outlet channel (124).

8. The turbomachine (1) turbine casing (130) as claimed in claim 6 or 7, wherein the inlet channel (122) and/or the outlet channel (124) extends plumb with the corresponding hook (120).

9. The turbomachine (1) turbine casing (130) as claimed in claims 6 and 7, wherein the inlet channel (122) and the outlet channel (124) extend at a first and second circumferential position of the corresponding hook (120), the first and second circumferential position of said corresponding hook (120) being intended to coincide with the circumferentially opposite ends of a ring segment intended to be mounted on the corresponding hook (120).

10. A turbomachine (1) including a turbine, **characterized in that** it comprises a turbine casing (130) as claimed in any of the preceding claims.
